# EUROPEAN PATENT APPLICATION

(11) **EP 3 269 476 A1**
(43) Date of publication of application: **17.01.2018**
(21) Application number: 16761547.5
(22) Date of filing: 29.02.2016
(51) Int. Cl.: B23B 19/02, B23Q 11/12, F16C 19/16, F16C 19/28, F16C 19/56, F16C 33/32, F16C 33/34, F16C 35/12, F16C 37/00

(54) **MAIN SHAFT DEVICE**

(30) Priority: 10.03.2015 JP 2015047077
(71) Applicant: NTN Corporation, Osaka-shi, Osaka 550-0003 (JP)
(72) Inventor: MIZUTANI, Mamoru, Kuwana-shi Mie 511-8678 (JP)
(74) Representative: Maikowski & Ninnemann Patentanwälte Partnerschaft mbB
(86) International application number: PCT/JP2016/056034
(87) International publication number: WO 2016/143577

(57) **Abstract**

This invention is applied to a spindle device used in, for example, a machine tool. The spindle device includes a double row cylindrical roller bearing (4) and a thrust load supporting bearing (5F, 5R) both interposed between a front side portion of a spindle (1) and a housing (2) and arranged from a front side end in this specific order. In the respective roller rows of the double row cylindrical roller bearing (4), the diameters of the inner ring raceway surfaces (44a) are identical with each other and the diameters of the outer ring raceway surfaces (42a) are identical with each other. The cylindrical roller (46B) of the roller row on the thrust load supporting bearings (5F, 5R) side has a size smaller than the cylindrical roller (46A) of the roller row on the counter thrust load supporting bearings (5F, 5R) side.

## Description

### CROSS REFERENCE TO THE RELATED APPLICATION

This application is based on and claims Convention priority to Japanese patent application No. 2015-047077, filed March 10, 2015, the entire disclosure of which is herein incorporated by reference as a part of this application.

### BACKGROUND OF THE INVENTION

### (Field of the Invention)

The present invention relates to a spindle device or a main shaft device for supporting, for example, a spindle or a main shaft employed in a machine tool.

### (Description of Related Art)

A double row cylindrical roller bearing for use in supporting a spindle of a kind used in a machine tool has been subjected to various improvements in order to enable the spindle to be operated at a high speed, to exhibit a high rigidity and to withstand the long time services. For example, the patent document 1, listed below, aims at increasing the high speed rotatability by reducing the number of rolling elements to a value smaller than those used in the ordinary bearing to thereby reduce the heat emission occurring in the bearing and the heat emission resulting from the stirring or agitating resistance of oil, both of which are brought about by the abrasive wear occurring in contact surfaces of the rolling elements. Also, the patent document 2 listed below makes use of a polyether ether ketone resin or the like as material for a retainer or a cage. Accordingly, suppression of the deterioration of an antifriction agent brought about by the presence of abrasion powder in the retainer, suppression of the centrifugal force acting of the retainer and suppression of the deformation of a tip end portion of a comb shaped retainer can be achieved. As a result, abnormal contact between the rolling element and the retainer is suppressed to allow the bearing to be operable at a high speed for a prolonged period of services.

Patent documents 3 to 9, also listed below, disclose a technology of changing radial inner clearances in the cylindrical roller bearing. The patent documents 3 to 6 pertains to a backup roller support bearing employed in a printing machine, in which the clearance present in the row on one side, where the radial load is high, is increased on a roller side (counter axial end side). For changing the clearance, a method of adjusting the groove dimensions of a bearing ring or the roller diameter is employed. Also, the patent documents 7 to 9 again listed below disclose such a design that at a site where a large misalignment occurs in, for example, a speed reducing device employed in automotive vehicles, the radial inner clearance on the side where the radial load is high is increased in a manner similar to that discussed above.

### [Prior Art Documents]

### [Patent Document]

Patent document 1: JP Laid-open Patent Publication No. 2002-039188
Patent document 2: Japanese Patent No. 4537920
Patent document 3: JP Laid-open Patent Publication No. 2004-069062
Patent document 4: Japanese Patent No. 3151082
Patent document 5: Japanese Patent No. 3934331
Patent document 6: JP Laid-open Patent Publication No. 2002-266853
Patent document 7: JP Examined Patent Publication No. S55-008690
Patent document 8: JP Examined Utility Model Publication No. S46-013845
Patent document 9: JP Laid-open Utility Model Publication No. S49-025938

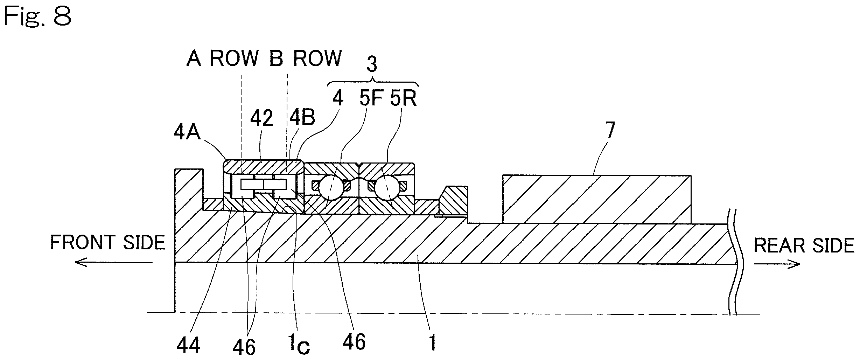

By way of example, as shown in Fig. 8 of the accompanying drawings, the spindle 1 of the lathe has a front side end supported by a combined bearing assembly 3 including a double row cylindrical roller bearing 4 and a pair of angular ball bearings 5F and 5R. The paired angular ball bearings 5F and 5R are used for supporting a thrust load. The double row cylindrical roller bearing 4 has an inner ring 44 mounted on a tapered portion 1c of the spindle 1. During the assembly of the double row cylindrical roller bearing 4, the double row cylindrical roller bearing 4 is pressed-in in a direction axially of the spindle 1 from a rear side of the spindle 1 towards a front side thereof while the inner diameter of the inner ring 44 is radially outwardly expanded by the tapered portion 1c. By so doing, a radial inner clearance is adjusted after the assemblage. The radial inner clearance after the assemblage is generally chosen to be within the range of about -2 µm to about -10 µm. In other words, there is no clearance between the inner ring 44 and any one of the cylindrical rollers 46 and also between any one of the cylindrical rollers 46 and the outer ring 42, and such a condition is established in which an elastic deformation of about 2 to 10 µm is provided to each of those members 42, 44 and 46.

One of the purposes for rendering the radial inner clearance after the assemblage to be not larger than -2 µm is to increase the rigidity of the spindle 1 and another one of the purposes is to suppress skidding of the cylindrical roller 46 which functions as the rolling elements. Once the cylindrical roller 46 skids, the driving force imparted to the spindle 1 will not be sufficiently transmitted from the spindle 1 to the outer ring 42 through the inner ring 44 and then through the cylindrical rollers 46, which eventually leads to generation of abnormal sounds between the inner ring 44 and the cylindrical rollers 46 and between the cylindrical rollers 46 and the outer ring 42 and premature failure such as, for example, smearing.

For driving the spindle employed in the lathe, a belt drive system has hitherto been used in which a drive motor and the spindle are drivingly connected with each other by means of a transmission belt. However, in recent years a built-in motor drive system has come to be employed so that the device can be compactized and can provide a high output. In addition, the spindle employed in association with the built-in motor drive system has such a problem that, since the motor unit tends to be heated up, the built-in motor drive system is apt to emit heat as compared with the spindle employed in association with the belt drive system. Yet, in the practice of the built-in motor drive system, an outer jacket cooling for cooling the spindle from a housing side is largely employed to suppress the heat emission. For this reason, the temperature difference between the inner ring and the outer ring in the bearing tends to become large.

Also, even in the spindle used in association with the built-in motor drive system, where the front side of the spindle is supported by the double row cylindrical roller bearing 4 and the pair of the angular ball bearings 5F and 5R as shown in Fig. 8, it has been well known that a roller row portion on the angular ball bearing side in the double row cylindrical roller bearing 4 (which row portion is hereinafter referred to as B row portion) is utilized under a condition more severe than that under which a roller row portion on the counter angular ball bearing side (which roller portion is hereinafter referred to as A row portion) is utilized. The reason therefor will now be discussed.
(1) The B row portion 4B is closer to a built-in motor 7, which forms a source of heat emission, than the A row portion 4A. Also, if in the case of employing the outer jacket cooling, the structure of the spindle device is more likely to allow outer ring 42 in the B row portion 4B to be cooled than that in the A row portion 4A.
(2) The B row portion 4B is sandwiched between the A row portion 4A and the angular ball bearings 5F and 5R for the support of the thrust load.

In view of those reasoning, as compared with the A row portion 4A, the B row portion 4B involves a large temperature difference between the inner and outer rings 44 and 42 and, correspondingly, the radial inner clearance is rendered to be small during the operation of the B row portion 4B. When used under these circumstances, the lubrication deterioration of the B row portion 4B is accelerated, resulting in inconveniences such as, for example, improper rotation.

### SUMMARY OF THE INVENTION

In view of the foregoing, the present invention is intended to provide a spindle device of a type in which excessive reduction of the radial inner clearance during the operation of the roller row portion on the thrust load supporting bearing side in the double row cylindrical roller bearing is suppressed to avoid the inconveniences such as the lubrication deterioration and the improper rotation.

In order to accomplish the foregoing object of the present invention, there is provided, in accordance with the present invention, a spindle device which includes: a spindle; a housing; and a double row cylindrical roller bearing and a thrust load supporting bearing, both of which are interposed between a front side portion of the spindle and the housing, the double row cylindrical roller bearing and the thrust load supporting bearing being arranged in order from a front side end of the spindle, wherein: the double row cylindrical roller bearing has a roller row on a thrust load supporting bearing side and a roller row on a counter thrust load supporting bearing side; and a diameter of an inner ring raceway surface of the roller row on the thrust load supporting bearing side is the same as that of the roller row on the counter thrust load supporting bearing side, and a diameter of an outer ring raceway surface of the roller row on the thrust load supporting bearing side is the same as that of the roller row on the counter thrust load supporting bearing side. In the spindle device, a cylindrical roller of the roller row on the thrust load supporting bearing side has a size smaller than a cylindrical roller of the roller row on the counter thrust load supporting bearing side.

According to the present invention, the cylindrical rollers in the roller row on the thrust load supporting bearing side are set to have a size smaller than the cylindrical rollers of the roller row on the counter thrust load supporting bearing side. For this reason, at the moment the temperature difference between the inner and outer rings in the roller row portion on the thrust load supporting bearing side becomes high as a result of the operation as compared with that of the roller row portion on the counter thrust load supporting bearing side, it is possible to render the radial inner clearances of the respective roller row portions during the operation to be substantially the same as each other, that is, substantially equal to each other. Accordingly, the roller row portion on the thrust load supporting bearing side avoids lubrication deterioration as a result that the radial inner clearance becomes small, thus eliminating the occurrence of the problems such as the improper rotation or the like. Also, even though the radial inner clearance on the thrust load supporting bearing side in a free state is increased, the radial inner clearances of the respective roller row portions during the operation become substantially the same as each other. Hence, no problem associated with the lack of rigidity in the roller row portion on the thrust load supporting bearing side will occur.

It is to be noted that the wording "roller row portion on the thrust load supporting bearing side" referred to above and hereinafter is intended to mean a portion in which the cylindrical rollers of the roller row on the thrust load supporting bearing side is engaged. On the other hand, the wording "roller row portion on the counter thrust load supporting bearing side" referred to above and hereinafter is intended to mean a portion in which the cylindrical rollers of the roller row on the counter thrust load supporting bearing side is engaged.

More specifically, the size of the cylindrical rollers of the roller row on the thrust load supporting bearing side has to be chosen as will now be described. In other words, the diameter of the cylindrical rollers in the roller row on the thrust load supporting bearing side is made to be smaller than that of the cylindrical rollers in the roller row on the counter thrust load supporting bearing side. In consideration of the radial inner clearance of the roller row portion on the thrust load supporting bearing side which becomes small as a result of the operation, the diameter of the cylindrical rollers of the roller row on the counter thrust load supporting bearing side is set to be smaller in advance. By so doing, the radial inner clearance of the roller row portion on the thrust load supporting bearing side and the radial clearance of the roller row portion on the counter thrust load supporting bearing side can be made substantially equal to each other during the operation.

It is to be noted that the patent documents 3 to 9 referred to above disclose the double row cylindrical roller bearing in which the radial inner clearance of a part of the roller rows is made larger than the radial inner clearance of the other of the roller rows in advance. However, according to those patent documents 3 to 9, the radial inner clearance of the roller row on which a high radial load acts is increased. In contrast thereto, the above discussed construction differs from the respective disclosures of the patent documents 3 to 9 in that the radial inner clearance of the roller row, which generates a substantial amount of heat, is made large. Specifically, the roller row, of which the radial inner clearance is made large, is that on a deep side (rear side) when viewed from front and, in this roller row, the load and the misalignment are rather small as compared with the other roller row.

In the present invention, each of the cylindrical rollers in the roller row on the thrust load supporting bearing side has an axial length of a portion which contacts the inner and outer rings, which axial length is smaller than that of the cylindrical rollers in the roller row on the counter thrust load supporting bearing side. If the axial length of a portion of the cylindrical roller which contacts the inner and outer rings is small, the stirring resistance at the time the cylindrical roller pushes away the lubricant oil becomes low, resulting in a low heat generation. For this reason, when the axial length of the cylindrical roller in the roller row on the thrust load supporting bearing side is made small, an undesirable increase of the temperature difference between the inner and outer rings can be suppressed during the operation of such cylindrical roller. Accordingly, the radial inner clearance of the roller row portion on the thrust load supporting bearing side and the radial inner clearance of the roller row portion on the counter thrust load supporting bearing side can be made substantially equal to each other.

In the present invention, the thrust load supporting bearing may include a pair of angular ball bearings that are arranged in axially opposed relationship to each other. In this case, of the paired angular ball bearings, the angular ball bearing close to the double row cylindrical roller bearing may make use of ceramic balls.

Where the thrust load supporting bearing is made up of the pair of the angular ball bearings, in order for the pair of the angular ball bearings to have a structure effective to support only the thrust load acting on the spindle, the outer ring used in the angular ball bearings generally has an outer diameter smaller than the diameter of the outer ring used in the double row cylindrical roller bearing. In the case of this construction, heat generated from the angular ball bearings tends to be hardly dissipated to the housing, to affect the double row cylindrical roller bearing adversely. Hence, there is the possibility that the radial inner clearance of the roller row portion on the thrust load supporting bearing side will become excessively small. However, if the balls used in the angular ball bearings on the double row cylindrical roller bearing side are employed in the form of ceramic balls as discussed above, the heat emission from the angular ball bearings can be suppressed to a low value, and the thermal influence on the neighboring double row cylindrical roller bearing can be lowered.

In the present invention, there may be provided a rear side bearing, which is used to support a rear side portion of the spindle, and a built in-motor may also be provided between the rear side bearing and both of the double row cylindrical roller bearing and the thrust load supporting assembly so that the spindle can be rotationally driven by the built-in motor.

The built-in motor drive system, as compared with the belt drive system, is apt to allow the spindle device in its entirety to emit heat. Also, if the built-in motor is employed as hereinabove discussed, a temperature rise of the roller row portion on the thrust load supporting bearing side positioned on the built-in motor side, which forms a source of heat emission in the double row cylindrical roller bearing, will become considerable. However, if as hereinbefore described, the size of the cylindrical rollers of the roller row on the thrust load supporting bearing side is chosen to be smaller in advance than that of the cylindrical rollers of the roller row on the counter thrust load supporting bearing side, the radial inner clearances during the operation of the roller row portion on the counter thrust load supporting bearing side and the roller row on the thrust load supporting bearing side can be made substantially the same as each other, that is, substantially equal to each other. For this reason, the thermal influence which may be brought about in the built-in motor can be minimized.

In the present invention, an outer jacket cooling may be applied to the spindle. The term "outer jacket cooling" referred to hereinbefore and hereinafter means cooling of the housing and refers to a cooling method effective to suppress the increase of the temperature of the main device in its entirety. Where the outer jacket cooling is applied to the spindle, the roller row portion on the thrust load supporting bearing side is structurally easily cooled as compared with the roller row portion on the counter thrust load supporting bearing side. Hence, the temperature difference between the inner and outer rings in the roller row portion on the thrust load supporting bearing side tends to become higher than the temperature difference between the inner and outer rings in the roller row portion on the counter thrust load supporting bearing side. However, if as hereinbefore described, the size of the cylindrical rollers of the roller row on the thrust load supporting bearing sides is chosen to be smaller in advance than that of the cylindrical rollers of the roller row on the counter thrust load supporting bearing side, the radial inner clearances during the operation of the roller row portion on the counter thrust load supporting bearing side and the roller row on the thrust load supporting bearing side can be made substantially the same as each other, that is, substantially equal to each other. For this reason, any influence brought about by a bias of cooling due to the outer jacket cooling can be eliminated.

The spindle device of the present invention is suitably used as a spindle device for use in a machine tool.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a schematic longitudinal sectional view showing a spindle device designed in accordance with a preferred embodiment of the present invention;
Fig. 2 is a fragmentary longitudinal sectional view showing a support section at a front side portion of the spindle in the spindle device shown in Fig. 1;
Fig. 3 is a diagram showing the difference in diameter between a cylindrical roller in the A row of the double row cylindrical roller bearing used in the spindle device of Fig. 1 and a cylindrical roller in the B row thereof;
Fig. 4 is a diagram showing the difference in axial length of a straight portion between the cylindrical roller in the A row of the double row cylindrical roller bearing employed in a different spindle device and the cylindrical roller in the B row thereof;
Fig. 5 is a longitudinal sectional view of a spindle device according to a reference example;
Fig. 6 is a longitudinal sectional view showing the support section of the front side portion of the spindle employed in the spindle device;
Fig. 7 is a longitudinal sectional view showing the support section of the front side portion of the spindle employed in a different spindle device; and
Fig. 8 is a fragmentary longitudinal sectional view showing the support section of the front side portion of the spindle used in the conventional spindle device.

### DESCRIPTION OF EMBODIMENTS

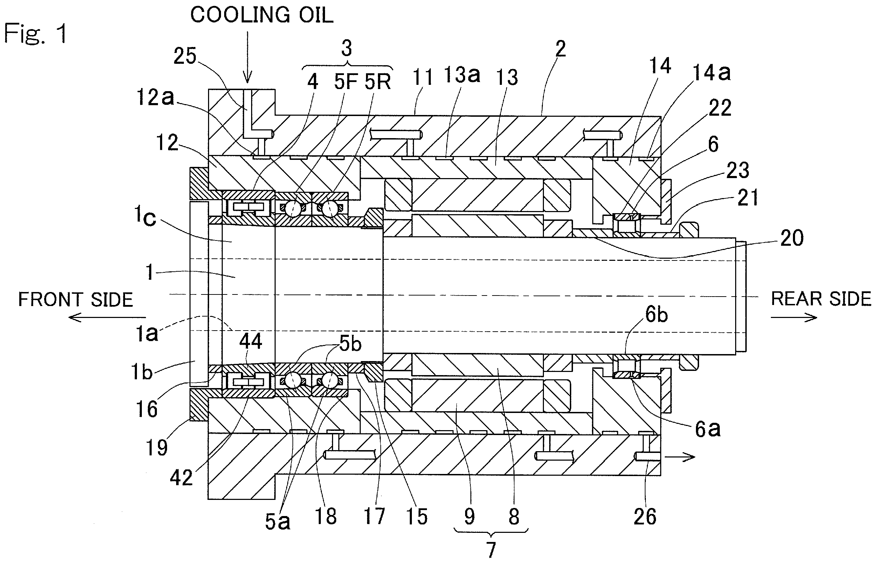

One preferred embodiment of the present invention will now be described in detail with particular reference to Figs. 1 to 3. Fig. 1 illustrates a longitudinal sectional view of the spindle device in its entirety. This spindle device is for use in a machine tool and may have a tool or a chuck that can be fitted to a front side (left side as viewed in the drawing) of a main shaft or a spindle 1. The spindle 1 is a tubular shaft having a throughhole 1a defined in a central portion thereof so as to extend in an axial direction. The spindle 1 is rotatably supported by a combined bearing assembly 3 and a rear side bearing 6, both of which are interposed between the spindle 1 and a housing 2, in a front side portion and a rear side (right side as viewed in the drawing) that are spaced apart from each other in the axial direction.

The combined bearing assembly 3 on the front side includes a single double row cylindrical roller bearing 4 and a pair of angular ball bearings 5F and 5R. From the front side the double row cylindrical roller bearing 4, and the front side angular ball bearing 5F and the rear side angular ball bearing5R are arranged in order. The paired angular ball bearings 5F and 5R are employed in the form of thrust load supporting bearings and are arranged in a back-to-back combined fashion. It is, however, to be noted that the paired angular ball bearings 5F and 5B may be arranged in a front-to-front combined fashion. The rear side bearing 6 is employed in the form of a single cylindrical roller bearing.

The spindle device of the construction described above is used in association with a so-called built-in motor drive system having a drive motor built in the housing 2. The spindle device includes a built-in motor 7 provided between the combined bearing assembly 3 on the front side and the rear side bearing 6. The built-in motor 7 in turn includes a rotor 8, fitted to the spindle 1, and a stator 9 fitted to the housing 2. The rotor 8 referred to above is employed in the form of, for example, a permanent magnet, whereas the stator 9 is employed in the form of a coil, a core or the like.

The housing 2 includes an outer cylindrical member 11 defining an inner peripheral surface thereof, a cylindrical front side inner cylindrical member 12, an intermediate inner cylindrical member 13 and a rear side inner cylindrical member 14, which members 12 to 14 are mounted on the inner periphery of the outer cylindrical member 11. An outer ring 42 of the double row cylindrical roller bearing 4 and outer rings 5a and 5a of the paired angular ball bearings 5F and 5R are mounted on the inner periphery of the front side inner cylindrical member 12. On the other hand, the stator 9 is fitted to an inner periphery of the intermediate cylindrical member 13 and an outer ring 6a of the rear side bearing 6 is mounted on an inner periphery of the rear side inner cylindrical member 14. Respective inner rings 44, 5b, 5b and 6b of the bearings 4, 5F, 5R and 6 are mounted on an outer peripheral surface of the spindle 1.

The double row cylindrical roller bearing 4 and the paired angular ball bearings 5F and 5R are arranged in a conditions with their inner rings held in contact with each other and also in a condition with their outer rings held in contact with each other. The inner ring 44 of the double row cylindrical roller bearing 4 and the inner rings 5b and 5b of the bearings 5F and 5R are axially positioned through inner ring spacers 16 and 17 between a flanged portion 1b, provided on a front end of the spindle 1, and a nut 15 threadingly mounted on the spindle 1. Also, the outer ring 42 of the double row cylindrical roller bearing 4 and the outer rings 5a and 5a of the bearings 5F and 5R are axially positioned by a stepped face 18 in the front side inner cylindrical member 12 and an outer ring holding member 19 fitted to the front side inner cylindrical member 12.

The inner ring 6b of the rear side bearing 6 is axially positioned by an inner ring spacer 30 and an inner ring holding member 21. The outer ring 6a of the rear side bearing 6 is axially positioned by a stepped face 22 of the rear side inner cylindrical member 14 and an outer ring holding member 23.

In the spindle device, an outer jacket cooling, by which the temperature rise of the spindle device in its entirety is suppressed by cooling the housing 2, is performed. Specifically, spiral cooling grooves 12a, 13a and 14a are formed in respective outer peripheral surfaces of the front side inner cylindrical member 12, the intermediate inner cylindrical member 13 and the rear side inner cylindrical member 14, and a cooling oil supplied from the outside of the housing 2 is supplied into the cooling grooves 12a, 13a and 14a through a cooling oil supply passage 25 provided in the outer cylindrical member 11. The cooling oil, which has passed through the cooling grooves 12a, 13a and 14a is discharged to the outside of the housing 2 through a cooling oil discharge passage 26 provided in the outer cylindrical member 11.

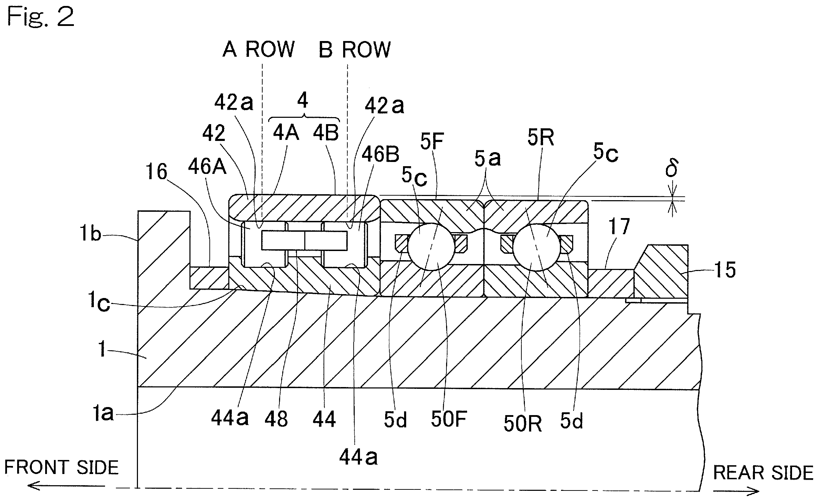

Fig. 2 illustrates a support section of a front side portion of the spindle 1 by means of the combined bearing assembly 3. The double row cylindrical roller bearing 4 has two rows of cylindrical rollers 46A and 46B as respective rolling elements that are provided between respective raceway surfaces 42a and 44a that are defined in the outer and inner rings 42 and 44. The cylindrical rollers 46A, 46B in the respective rows are circumferentially equidistantly spaced from each other by a corresponding retainer 48. The inner ring 44 is mounted on a tapered portion 1c of the spindle 1. At the tapered portion 1c, gradual increase in diameter takes place towards the front side. When the double row cylindrical roller bearing 4 is to be assembled onto the spindle 1, the double row cylindrical roller bearing 4 is axially pressed-in from the rear side towards the front side relative to the spindle 1, causing the tapered portion 1c to expand the inner diameter of the inner ring 44. By so doing, a radial inner clearance after the assemblage is rendered to be a negative clearance. Material used to form any one of the outer ring 42, the inner ring 44 and the cylindrical rollers 46A and 46B is, for example, a bearing steel.

In the description that follows, of the bank of the two rows of the cylindrical rollers 46A and 46B, the roller row on a counter thrust load supporting bearing (angular ball bearings 5F and 5R) side is referred to as A row, and the roller row on a thrust load supporting bearing side is referred to as B row. Also, a portion of the counter thrust load supporting bearing side in the double row cylindrical roller bearing 4 is referred to as an A row portion 4A, and a portion of the thrust load supporting bearing side is referred to as a B row portion 4B.

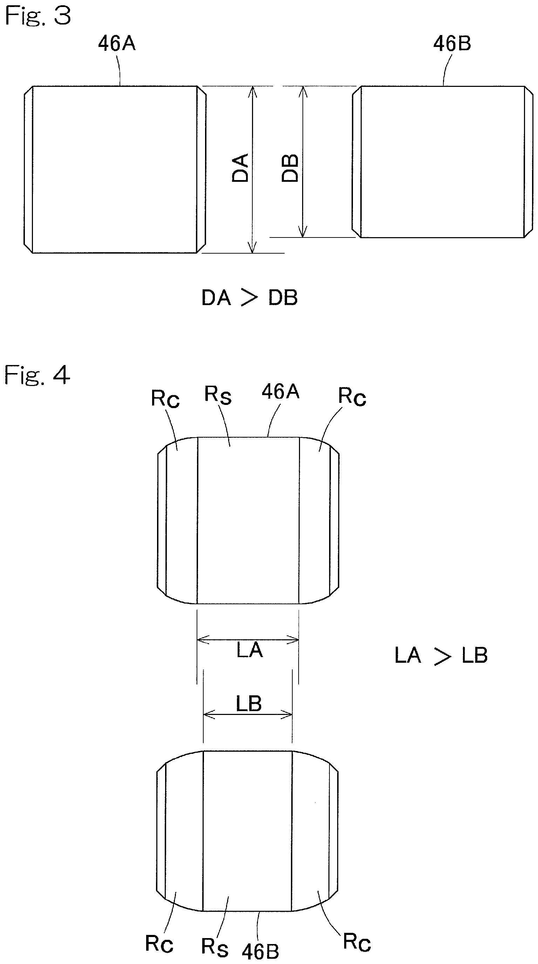

The diameter of the inner ring raceway surface 44a for the roller row A is the same as that of the inner ring raceway surface 44a for the roller row B, and the diameter of the outer ring raceway surface 42a for the roller row A is the same as that of the outer ring raceway surface 42a for the roller row B. In contrast thereto, a size of the cylindrical roller 46A for the roller row A is different from that of the cylindrical roller 46B for the roller row B. In other words, as shown in Fig. 3, the diameter DB of each of the cylindrical rollers 46B in the B row is smaller than the diameter DA of each of the cylindrical rollers 46A in the A row. Specifically, the diameter DB is so chosen as to be smaller than the diameter DA by about 2 µm. The purpose therefor is that during the operation of the spindle the radial inner clearance in the A row portion 4A is so rendered as to be substantially the same as the radial inner clearance in the B row portion 4B.

Each of the angular ball bearings 5F and 5R is provided with corresponding balls 50F or 50R which form rolling elements interposed between the outer ring 5a and the inner ring 5b. The balls 50F and 50R are held by a retainer 5d so that each of them is equally spaced in a circumferential direction. As hereinbefore described, the paired angular ball bearings 5F and 5R are arranged in back-to-back combined fashion relative to each other. In order to render each of the angular ball bearings 5F and 5R to support only the thrust load acting on the spindle 1, the outer ring 5a in each of the angular ball bearings 5F and 5R has an outer diameter which is smaller than the outer diameter of the outer ring 42 in the double row cylindrical roller bearing 4. This difference is indicated by δ in Fig. 2.

The angular ball bearing 5F on the front side, that is, the double row cylindrical roller bearing 4 side has its outer ring 5a and inner ring 5b both made of a bearing steel, but has the balls 50F employed in the form of ceramic balls. On the other hand, the angular ball bearing 5R on the rear side has the outer ring 5a, the inner ring 5b and the balls 5R all made of a bearing steel. The purpose of using the ceramic balls in the angular ball bearing 5F on the double row cylindrical roller bearing 4 side is that during the operation of the spindle the radial inner clearance in the A row portion 4A can be rendered equal to the radial inner clearance in the B row portion 4B of the double row cylindrical roller bearing 4. The reason therefor will be discussed later.

In the support section of the front side portion of this spindle device, the diameter DB of the cylindrical rollers 46B of the B row in the double row cylindrical roller bearing 4 is so chosen as to be smaller than the diameter DA of the cylindrical rollers 46A of the A row. For this reason, at the time the temperature difference between the inner and outer rings 44 and 42 for the B row portion 4B increases to a high value as compared with that for the A row portion 4A as a result of the operation, the radial inner clearances during the operation of the row portion 4A and 4B become substantially equal to each other. Accordingly, the B row portion 4B, which is a roller row portion on the thrust load supporting bearing side, comes to have the radial inner clearance to a value enough to avoid the lubrication deterioration. Therefore, any inconvenience such as, for example, defective rotation, can be avoided. Also, even though the radial inner clearance of the B row portion 4B is increased in a free condition, the radial inner clearances of the A and B row portions 4A and 4B become substantially equal to each other during the operation. For this reason, no problem associated with the lack of rigidity of the B row portion 4B occurs.

Also, in this spindle device, the outer ring 5 in each of the angular ball bearings 5F and 5R has an outer diameter which is smaller than that of the outer ring 42 in the double row cylindrical roller bearing 4. For this reason, heat evolved in the angular ball bearings 5F and 5R can be hardly dissipated to the housing 2, and thus, the neighboring double row cylindrical roller bearing 4 is apt to be thermally affected. Once the double row cylindrical roller bearing 4 is thermally affected, the radial clearance in the B row portion 4B of the double row cylindrical roller bearing 4 will possibly become an excessively small clearance. Accordingly, the balls 50F employed in the angular ball bearing 5F on the double row cylindrical bearing 4 side are used in the form of ceramic balls. Hence, the amount of heat generated in the angular ball bearing 5F on the double row cylindrical roller bearing 4 side can be suppressed, and the thermal influence brought on the neighboring double row cylindrical roller bearing 4 can therefore be reduced.

Although in the practice of the foregoing embodiment of the present invention, the diameter of each of the cylindrical rollers 46B in the B row of the double row cylindrical roller bearing 4 has been shown and described as being smaller than the diameter of each of the cylindrical rollers 46A in the A row, a straight portion length LB of the cylindrical roller 46B in the B row may be smaller than a straight portion length LA of the cylindrical roller 46A in the A row as shown in Fig. 4. The term "straight portion length" referred to above and hereinafter is intended to mean a length of an axial straight portion straight rollers and crowning rollers.

In other words, as shown in Fig. 4, where the crowning roller is employed for each of the cylindrical rollers 46A in the A row and each of the cylindrical roller 46B in the B row, differentiating the lengths LA and LB of the straight portion Rs between crowning areas Rc and Rc from each other makes it possible to provide such a relationship as expressed by LA > LB, i.e., to render the length LA to be larger than the length LB. On the other hand, where each of the cylindrical rollers 46A in the A row and each of the cylindrical rollers 46B in the B row are employed both in the form of a straight roller, differentiating the lengths each between chamfered areas from each other makes it possible to provide such relationship as expressed by LA > LB, i.e., to render the length LA to be larger than the length LB (although not shown).

If the straight portion length of the cylindrical roller is small, the stirring resistance at the time the cylindrical roller pushes away the lubricant oil will become low, accompanied by a low heat generation. For this reason, considerable increase of the temperature difference between the inner and outer rings 44 and 42 during the operation of the cylindrical rollers 46B can be suppressed when the straight portion length LB of each of the cylindrical rollers 46B in the B row is reduced to a smaller value. Hence, it is possible to render the radial inner clearances during the operation of the A row portion 4A and the B row portion 4B in the double row cylindrical roller bearing 4 to be substantially equal to each other.

In the practice of the foregoing embodiment of the present invention, the radial inner clearances of the A row portion 4A and the B row portion 4B of the double row cylindrical roller 4 during the operation is made substantially equal to each other by reducing the size of the cylindrical roller 46B in the B row to a value smaller than the size of the cylindrical roller 46A in the A row. It is, however, to be noted that a technique of reducing the diameter of the cylindrical roller 46B shown in and described with reference to Fig. 3 and a technique of changing the straight portion length of the cylindrical roller 46B shown in and described with reference to Fig. 4 may be concomitantly employed.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

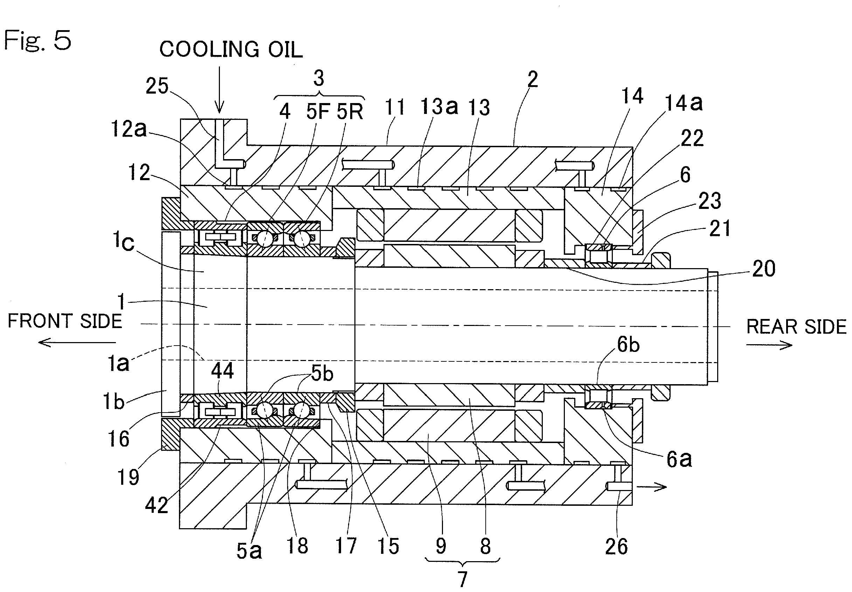

In the description that follows, the spindle device of a version not included within the scope of the present invention but having the same objective will be described with particular reference to Figs. 5 to 7. Such device functions to avoid an excessive reduction of the radial inner clearance of the B row portion 4B during the operation to thereby alleviate the possible lubrication deterioration in the B row portion 4B so that the occurrence of any problems such as, for example, the improper rotation can be suppressed.

Even in the spindle device in this reference example, the front side portion of the spindle 1 is supported by a combined bearing assembly 3 comprised of an assembly of a single double row cylindrical roller bearing 4 and a pair of angular ball bearings 5F and 5R which serve as thrust load supporting bearings. This spindle device in the reference example now under discussion differs from the spindle device shown in and described in connection with the foregoing embodiment of the present invention lies in that the size of the cylindrical rollers 46A of the A row in the double row cylindrical roller bearing 4 is the same as that of the cylindrical rollers 46B of the B row in the double row cylindrical roller bearing 4, that is, equal to each other and in that, regarding the manner of fitting of the outer ring 42 of the double row cylindrical roller bearing 4 to the housing 2, a large clearance amount between the outer ring 42 and the housing 2 is employed in the B row portion 4B rather than that in the A row portion 4A so that the outer ring 42 of the B row portion 4B is engaged with the housing 2 under clearance fit. Other structural features than those described above are similar to counterparts of the spindle device shown in and described in connection with the foregoing embodiment of the present invention. It is, however, to be noted that components of the spindle device in this reference example, which are similar to those shown and described in connection with the foregoing embodiment, are shown by like reference numerals and, therefore, the details thereof are not reiterated for the sake of brevity.

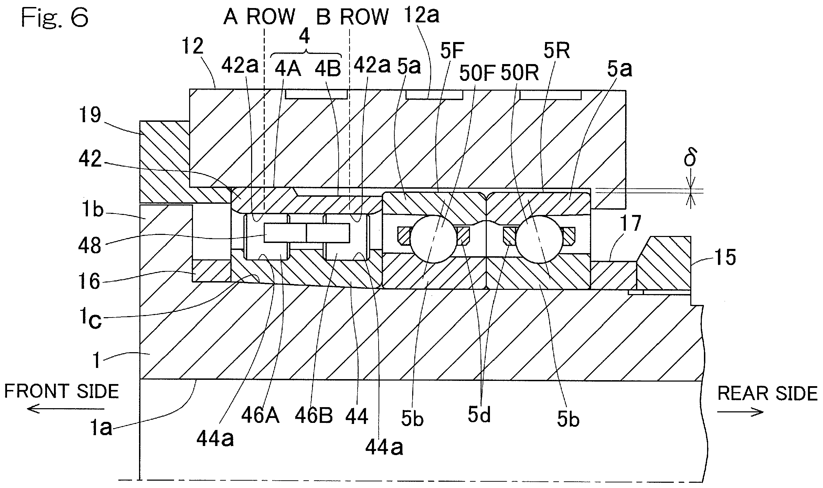

By way of example, as shown in Fig. 6, the inner diameter of a portion of the inner peripheral surface of the housing 2, in which the outer ring 42 of the double row cylindrical roller bearing 4 is engaged, remains constant and, at the same time, the outer diameter of the B row portion 4B of the outer ring 42 in the double row cylindrical roller bearing 4 is rendered to be smaller than the outer diameter of the A row portion 4A thereof. It is to be noted that in Fig. 6, the clearance between the outer ring 42 in the B row portion 4B and the front side inner cylindrical member 12 of the housing 2 is shown exaggeratedly.

As discussed above, when the mounting between the housing 2 and a portion of the B row portion 4B in the outer ring 42 of the double row cylindrical roller bearing 4 is performed under clearance fit, radial expansion is possible without the portion of the B row portion 4B of the outer ring 42 being constrained by the housing 2. Accordingly, even though the temperature difference becomes high under the influence of heat emitted from the built-in motor 7 and/or cooling by the outer jacket cooling, it is possible to avoid the radial inner clearance of the B row portion 4B from becoming excessively small. Therefore, the lubrication deterioration of the B row portion 4B, which forms a roller row portion on the thrust load supporting bearing side, can be avoided and the occurrence of the inconveniences such as the improper rotation or the like can be alleviated.

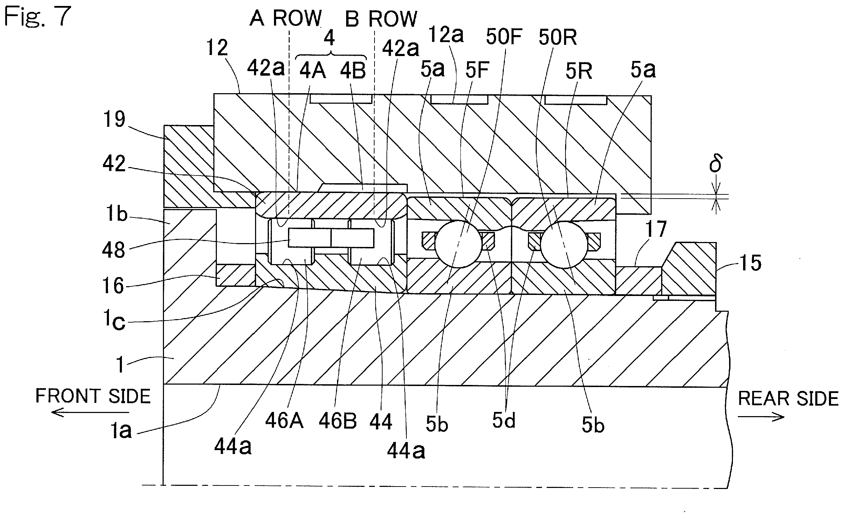

Also, as shown in Fig. 7, while the outer diameter of the outer ring 42 of the double row cylindrical roller bearing 4 remains constant, the inner diameter of a portion of the inner peripheral surface of the housing 2, with which the B row portion 4B of the outer ring 42 is engaged, may be increased. With this structure the engagement between a portion of the B row portion 4B of the outer ring 4 and the front side inner cylindrical member 12 of the housing 2 can be accomplished under clearance fit. Accordingly, as is the case with that shown in and described with reference to Fig. 6, the lubrication deterioration of the B row portion 4B, which is a roller row on the thrust load supporting bearing side can be avoided to eliminate the occurrence of the inconveniences such as the improper rotation or the like. It is, however, to be noted that the technique shown in and described with reference to Fig. 6 and that shown in and described with reference to Fig. 7 can be concomitantly employed although this is not shown.

### Reference Numerals

1 ···· Spindle
2 ···· Housing
4 ···· Double row cylindrical roller bearing
4A ···· A row portion (Roller row portion on the counter thrust load supporting bearing side)
4B ···· B row portion (Roller row portion on the thrust lad supporting bearing side)
5F, 5R ···· Angular ball bearing (Thrust load supporting bearing)
6 ···· Rear side bearing
42 ···· Outer ring
42a ···· Outer ring raceway surface
44 ···· Inner ring
44a ···· Inner ring raceway surface
46A ···· Cylindrical roller of the roller row portion on the counter thrust load supporting bearing side
46B ···· Cylindrical roller of the roller row portion on the thrust load supporting bearing side
50F, 50R ···· Ball

## Claims

1. A spindle device comprising:
a spindle;
a housing; and
a double row cylindrical roller bearing and a thrust load supporting bearing, both of which are interposed between a front side portion of the spindle and the housing, the double row cylindrical roller bearing and the thrust load supporting bearing being arranged in order from a front side end of the spindle, wherein:
the double row cylindrical roller bearing has a roller row on a thrust load supporting bearing side and a roller row on a counter thrust load supporting bearing side;
a diameter of an inner ring raceway surface of the roller row on the thrust load supporting bearing side is the same as that of the roller row on the counter thrust load supporting bearing side, and a diameter of an outer ring raceway surface of the roller row on the thrust load supporting bearing side is the same as that of the roller row on the counter thrust load supporting bearing side; and
a cylindrical roller of the roller row on the thrust load supporting bearing side has a size smaller than a cylindrical roller of the roller row on the counter thrust load supporting bearing side.

2. The spindle device as claimed in claim 1, wherein each of the cylindrical rollers in the roller row on the thrust load supporting bearing side has a diameter smaller than that of the cylindrical rollers in the roller row on the counter thrust load supporting bearing side.

3. The spindle device as claimed in claim 1, wherein each of the cylindrical rollers in the roller row on the thrust load supporting bearing side has an axial length of a portion, which contacts the inner and outer rings, which length is smaller than that of the cylindrical rollers in the roller row on the counter thrust load supporting bearing side.

4. The spindle device as claimed in any one of claims 1 to 3, wherein the thrust load supporting bearing includes a pair of angular ball bearings that are arranged in axially opposed relationship to each other.

5. The spindle device as claimed in claim 4, wherein of the pair of the angular ball bearings, each of balls used in the angular ball bearing close to the double row cylindrical roller bearing side is in the form of a ceramic ball.

6. The spindle device as claimed in any one of claims 1 to 5, further comprising:
a rear side bearing, which is used to support a rear side portion of the spindle; and
a built in-motor provided between the rear side bearing and both of the double row cylindrical roller bearing and the thrust load supporting assembly, the spindle being rotationally driven by the built-in motor.

7. The spindle device as claimed in any one of claims 1 to 6, wherein an outer jacket cooling is applied to the spindle.

8. A spindle device for a machine tool, in which the spindle device defined in any one of claims 1 to 7 is used.
